Europäisches Patentamt

European Patent Office

Office européen des brevets

(19)

(11) Publication number: **0 054 234**
**B1**

(12) EUROPEAN PATENT SPECIFICATION

(45) Date of publication of patent specification: **16.04.86**

(21) Application number: **81110140.1**

(22) Date of filing: **04.12.81**

(51) Int. Cl.⁴: **G 21 C 7/26**

(54) Spectral shift reactor.

(30) Priority: **16.12.80 US 217060**
**09.11.81 US 318761**

(43) Date of publication of application:
**23.06.82 Bulletin 82/25**

(45) Publication of the grant of the patent:
**16.04.86 Bulletin 86/16**

(84) Designated Contracting States:
**AT BE CH DE LI SE**

(56) References cited:
**DE-A-1 902 712**
**GB-A- 983 595**
**US-A-3 036 964**
**US-A-3 205 144**
**US-A-3 285 820**
**US-A-3 551 289**
**US-A-4 092 216**

(73) Proprietor: **WESTINGHOUSE ELECTRIC
CORPORATION**
**Westinghouse Building Gateway Center
Pittsburgh Pennsylvania 15222 (US)**

(72) Inventor: **Dollard, Walter John**
**417 Woodland Hills Drive**
**Pittsburgh Pennsylvania (US)**
Inventor: **Doshi, Pratap Kilachand**
**3803 Edinburg Drive**
**Murrysville Pennsylvania (US)**
Inventor: **George, Raymond Anthony**
**1228 Northwestern Drive**
**Monroeville Pennsylvania (US)**

(74) Representative: **Holzer, Rupprecht, Dipl.-Ing.**
**Philippine-Welser-Strasse 14**
**D-8900 Augsburg (DE)**

## Description

The invention relates to spectral shift reactor control and more particularly to mechanical means for spectral shift reactor control.

In typical nuclear reactors, reactivity control is accomplished by varying the amount of neutron absorbing material (poisons) in the reactor core. Generally, neutron absorbing control rods are utilized to perform this function by varying the number and location of the control rods with respect to the reactor core. In addition to control rods, burnable poisons and poisons dissolved in the reactor coolant can be used to control reactivity.

In the conventional designs of pressurized water reactors, an excessive amount of reactivity is designed into the reactor core at start-up so that as the reactivity is depleted over the life of the core the excess reactivity may be employed to lengthen the core life. Since an excessive amount of reactivity is designed into the reactor core at the beginning of core life, neutron absorbing material such as soluble boron must be placed in the core at the time in order to properly control the excess reactivity. Over the core life, as reactivity is consumed, the neutron absorbing material is gradually removed from the reactor core. The neutron absorbing material removes reactivity from the reactor core which could otherwise be used in a more productive manner such as in plutonium fuel production. The consumption of reactivity in this manner without producing a useful product results in a less efficient depletion of uranium and greater fuel costs than could otherwise be achieved. Therefore, it would be advantageous to be able to extend the life of the reactor core without suppressing excess reactivity with neutron absorbing material thereby providing an extended core life with a significantly lower fuel cost.

A method of providing for an extended core life while reducing the amount of neutron absorbing material in a heavy water reactor core is by the use of "Spectral Shift Control" (US—A—3205144). In this case, the reduction of excess reactivity (and thus neutron absorbing material) is achieved by replacing a large portion of the heavy water reactor coolant with ordinary water. This retards the chain reaction by shifting the neutron spectrum to higher energies and permits the reactor to operate at full power with reduced neutron absorbing material. This shift in the neutron spectrum to a "hardened" spectrum also causes more of the $U^{238}$ to be coverted to plutonium that is eventually used to produce heat. Thus, the shift from a "soft" to a "hard" spectrum results in more neutrons being consumed by $U^{238}$ in a useful manner rather than by poisons. As reactivity is consumed, the ordinary water is gradually replaced with heavy water so that the reactor core activity is maintained at a proper level. By the end of core life, essentially all the ordinary water has been replaced by heavy water while the core reactivity has been maintained. Thus, the reactor can be controlled without the use of neutron absorbing material and without excess reactivity at start-up which results in a significant uranium fuel cost savings. The additional plutonium production also reduces the $U^{235}$ enrichment requirements.

It is the principal object of the present invention to provide a mechanical spectral shift reactor which uses only ordinary water to achieve originally a harder neutron spectrum than at the end of core life for reduced uranium fuel costs and for an extended reactor core life.

With this object in view, the present invention resides in a spectral shift pressurized water nuclear reactor including a reactor vessel having an inlet and an outlet for circulating a water coolant in heat transfer relationship with a core disposed therein, a plurality of fuel assemblies disposed in said core for generating heat by nuclear fission, and a plurality of incrementally movable control rods disposed in said reactor for controlling the power level and power distribution of said reactor, characterised in that a plurality of water displacer elements is so arranged in said reactor vessel as to be movable into and out of said core for displacing water therefrom when said displacer elements are inserted in said core thereby to reduce the core moderation, said water displacer elements containing a material having a substantially lower neutron absorbing capability than said control rods, and that a separate hydraulically operated drive mechanism is mounted on said reactor vessel and connected to said water displacer elements for completely inserting said displacer elements into, or completely withdrawing said displacer elements from, said core.

The invention will become more readily apparent from the following description of a preferred embodiment thereof shown by way of example only, in the accompanying drawings, wherein:

Figure 1 is a cross-sectional view in elevation of the reactor vessel;

Figure 2 is a cross-sectional view in elevation of the top portion of the fuel assembly;

Figure 3 is a cross-sectional view in elevation of the bottom portion of the fuel assembly;

Figure 4 is a view in perspective of displacer rods and their respective fuel assembly;

Figure 5 is a cross-sectional view in elevation of a displacer rod guide structure;

Figure 6 is a view along line VI—VI of Figure 5;

Figure 7 is a diagram of a quarter core of the reactor;

Figure 8 is an enlarged view of a portion of the quarter core;

Figure 9 is an enlarged view of a portion of the quarter core;

Figure 10 is cross-sectional diagram of a typical fuel assembly; and

Figure 11 is a diagram of a section of the core.

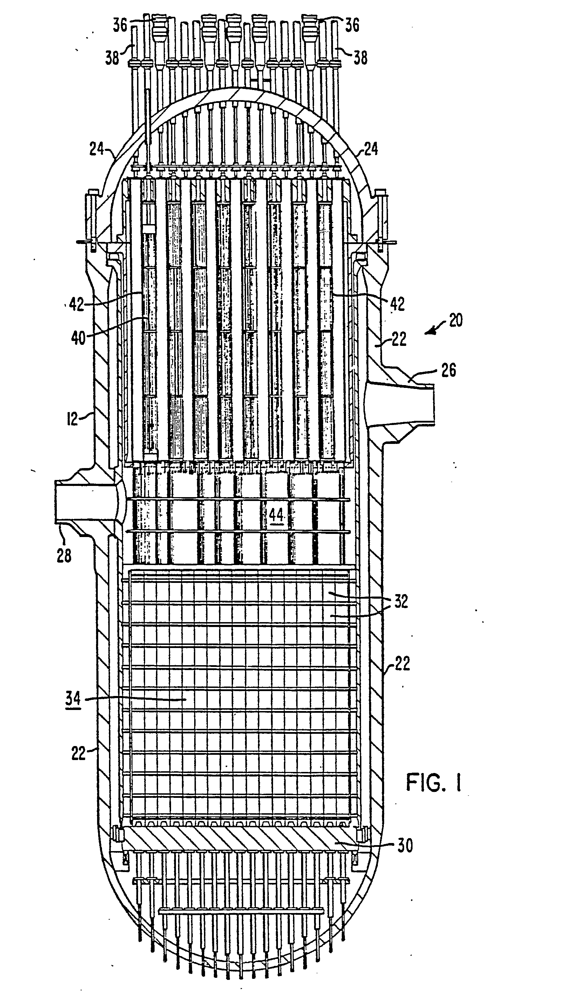

Referring to Figure 1, a nuclear reactor referred to generally as 20 comprises a reactor vessel 22 with a removable closure head 24 attached to the top end thereof. An inlet nozzle 26 and an outlet nozzle 28 are connected to reactor vessel 22 to allow a coolant such as water to circulate through reactor vessel 22. A core plate 30 is disposed in the lower portion of reactor vessel 22 and serves to support fuel assemblies 32. Fuel assemblies 32 are arranged in reactor vessel 22 and comprise reactor core 34. A plurality of control rod drive mechanisms 36 are disposed on closure head 24 for inserting the control rods into, or withdrawing them from, the fuel assemblies 32. In addition, a plurality of displacer rod drive mechanisms 38 are also disposed on closure head 24 for inserting displacer rods 40 into or withdrawing them from, the fuel assemblies 32. The displacer rod drive mechanism 38 may be similar to the one described in EP—A1—0 054 788. For purpose of clarity, only some selected displacer rods 40 are shown in Figure 1. A plurality of displacer rod guide structures 42 are located in the upper section of reactor vessel 22 with each being in alignment with a displacer rod drive mechanism 38 for guiding the movement of displacer rods 40 through the upper section of reactor vessel 22. A calandria 44 may be arranged between fuel assemblies 32 and displacer rod guide structures 42 and comprises a multiplicity of hollow stainless steel tubes arranged in colinear alignment with each displacer rod and control rod for providing guidance of the displacer rods and control rods through the calandria area and for minimizing flow induced vibrations in the displacer rods and control rods.

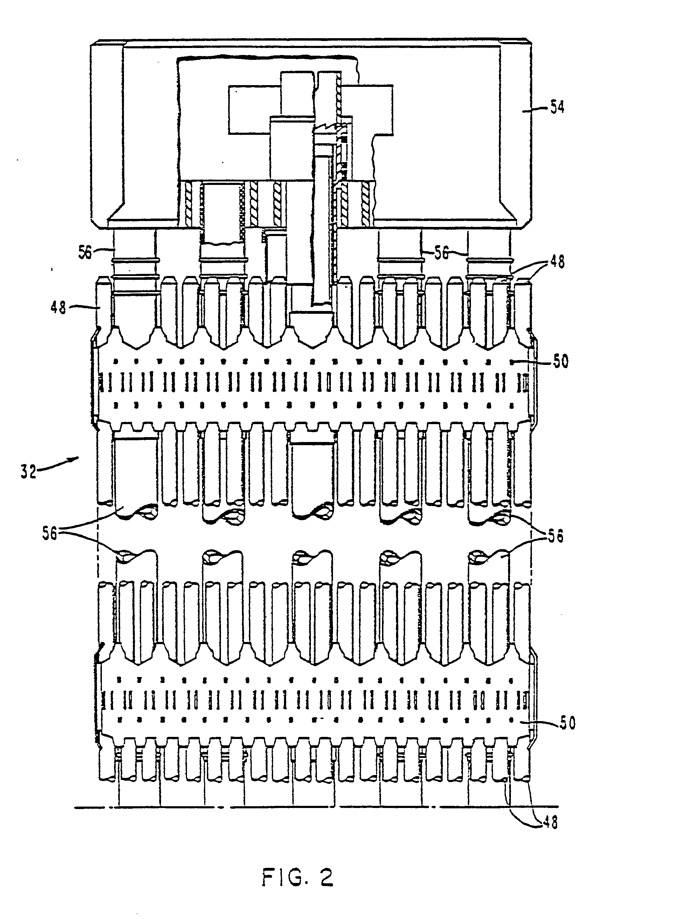

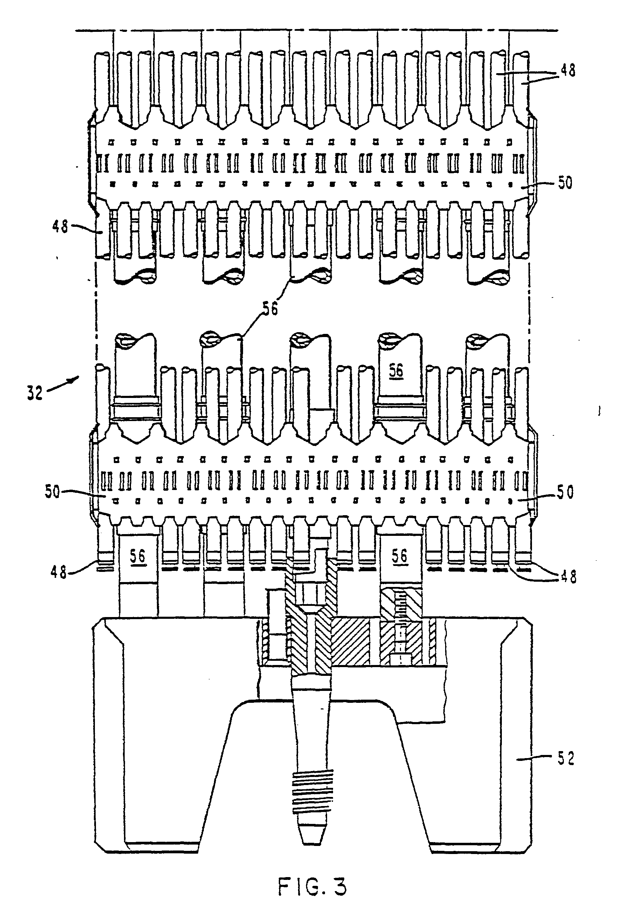

Referring now to Figures 2—4, fuel assemblies 32 comprise fuel elements 48, grids 50, bottom nozzle 52, top nozzle 54, and guide tubes 56. The fuel elements 48 may be elongated cylindrical metallic tubes containing nuclear fuel pellets and having both ends sealed by end plugs. Fuel elements 48 may be arranged in a substantially 20 × 20 rectangular array and are held in place by grids 50. Guide tubes 56 which may number 25 are arranged in a generally 5 × 5 array within each fuel assembly 32. Each guide tube 56 occupies the space of about four fuel elements 48 and extends from bottom nozzle 52 to top nozzle 54 to provide a means to support grids 50, top nozzle 54 and bottom nozzle 52. Guide tubes 56 may be hollow cylindrical metallic tubes manufactured from Zircaloy and capable of accommodating rods such as displacer rods 40 or control rods. Displacer rods 40 and control rods are manufactured to be approximately the same size so that each guide tube 56 can equally accommodate either a displacer rod or a control rod. When not occupied by a rod, guide tubes 56 are filled with reactor coolant; however, when inserted into the guide tubes 56, the displacer rods 40 displace the coolant therein.

Grids 50 are positioned at various locations along the length of fuel assembly 32 and serve to space fuel elements 48 and guide tubes 56 at appropriate distances from each other and to allow the reactor coolant to circulate in heat transfer relationship with fuel elements 48.

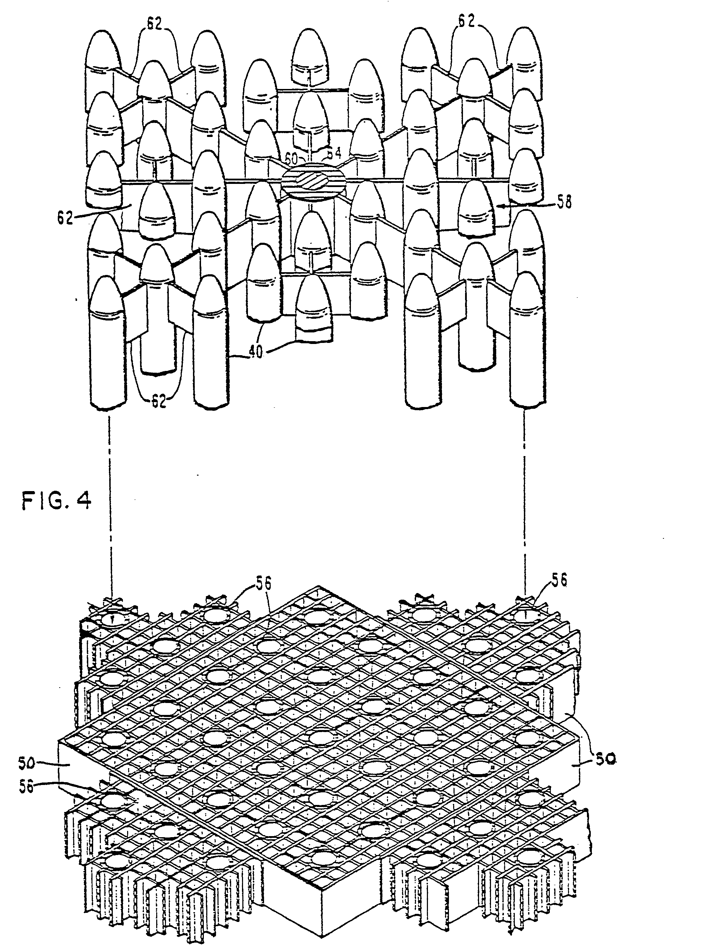

As can be seen in Figure 4, displacer rods 40 are elongated cylindrical rods of the type described in EP—A1—0 054 237. Displacer rods 40 may also contain $ZrO_2$ or $Al_2O_3$ pellets for weighting the rod and enhancing its lowerability. Displacer rods 40 are arranged so as to be in colinear alignment with guide tube 56 so that displacer rods 40 may be inserted into guide tubes 56 when it is desired. Displacer rods 40 are supported from a common attachment known as a spider 58. Spider 58 comprises a body 60 with struts 62 radially extending from the body 60. Displacer rods 40 are individually attached to each strut 62 to form an array corresponding to the array of guide tubes 56 into which displacer rods may be inserted. Spider 58 is attached to drive shaft 64 which is connected to displacer rod drive mechanism 38. Activation of displacer rod drive mechanism 38 causes drive shaft 64 to be either lowered or raised thereby inserting or withdrawing displacer rods 40 from fuel assemblies 32 of core 34.

It is important to note that each spider 58 is arranged to be able to insert displacer rods 40 into more than one fuel assembly 32. For example, as shown in Figure 4, spider 58 is capable of inserting 25 displacer rods in center fuel assembly 32 and four displacer rods in each of the adjacent four fuel assemblies. In this manner displacer rods 40 can be moved in and out of fuel assemblies 32 without increasing the number of spiders and drive mechanisms.

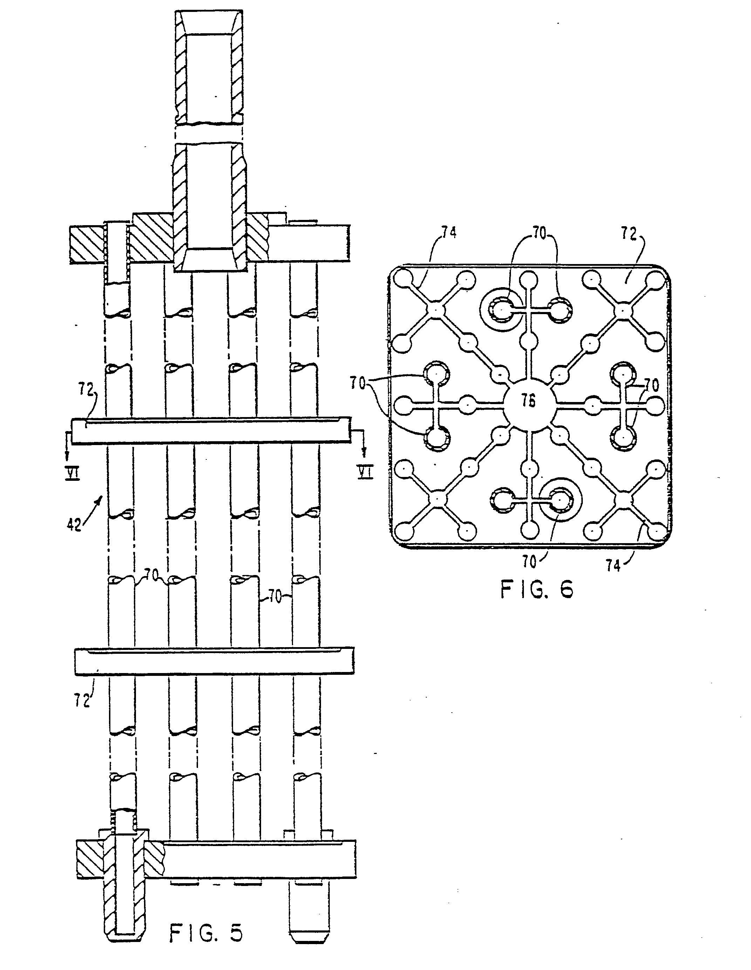

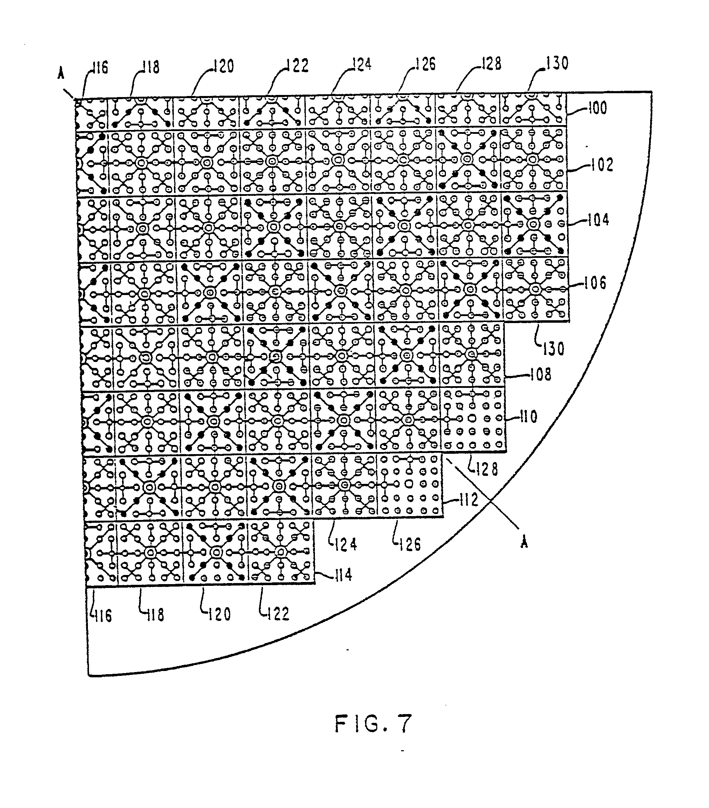

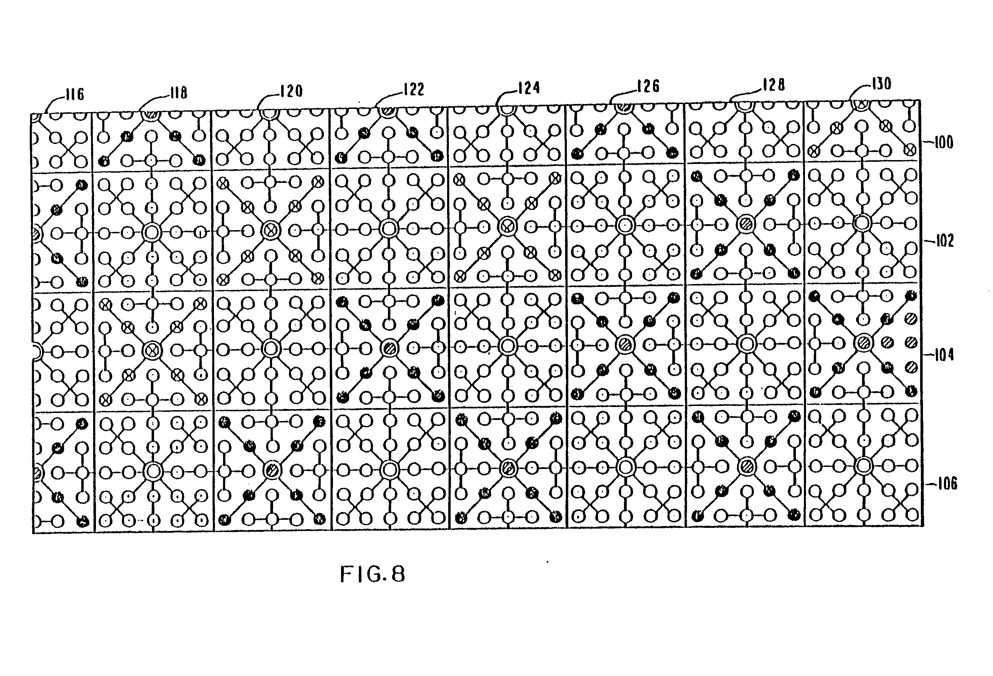

Referring now to Figures 5 and 6, displacer rod guide structures 42 comprise a plurality of split tube guides 70 which are designed to allow rods such as displacer rods or control rods to pass therethrough. Displacer rod guide structures 42 are located between calandria 44 and closure head 24 as shown in Figure 1 and are arranged to correspond to each displacer rod drive mechanism 38. A number of spacers 72 are located at various locations along split tube guides 70 and together with split tube guides 70 serve to guide displacer rods 40 through the upper section of reactor vessel 22. As can be seen in Figure 6, 8 split tube guides 70 may be provided for guiding displacer rods 40. The "split" in split tube guides 70 along with slots 74 in spacers 72 allow spider 58 to pass therethrough while maintaining alignment of the rods with guide tubes 56 in fuel assemblies 32. A center slot 76 is also provided for accommodating drive shaft 64 so that spider 58 may be moved therethrough.

Referring again to Figure 1, calandria 44 which comprises a multiplicity of tubes provides guidance for the rods such as displacer rods 40 through the calandria area. In general, the tubes in calandria 44 are not split tubes, as are split tube guides 70, so that spider 58 stops its descent when spider 58 nears the top of the tubes in calandria 44. When stopped at the top of calandria 44 all rods extend through the calandria tubes and are fully inserted in fuel assembly 32. While inserted in the calandria tubes, the rods are protected from the flow of reactor coolant thereby minimizing vibrations that would otherwise be induced by the velocity of the reactor coolant in that area.

There are different types of rods which can be inserted into guide tubes 56. For example, displacer rods, control rods, and gray rods may be arranged to be inserted in guide tubes 56. All of the rods are approximately the same size and configuration, but because of the materials with which they are made serve different purposes. Displacer rods 40, which may be either hollow thick walled tubes and which may contain a low neutron absorbing material such as $ZrO_2$ or $Al_2O_3$ pellets, are used to displace reactor coolant and thereby control reactor moderation. Control rods contain neutron absorbing material as is well understood in the art and serve to control core reactivity in a commonly understood fashion. Gray rods are similar to displacer rods 40 but are made of an intermediate neutron absorbing material such as stainless steel so that their reactivity worth per rod is greater than that of displacer rods 40.

Referring now to Figures 7—11, the quarter core arrangement of fuel elements 48, displacer rods 40, control rods 80, gray rods 82, and unrodded locations 84 are shown. It is to be understood that the full reactor core configuration can be established by extrapolating the quarter core shown in Figure 7. Actually, the quarter core shown in Figure 7 is a mirror image of the eighth core taken along line A—A of Figure 7. However, the quarter core of Figure 7 is being shown for clarity.

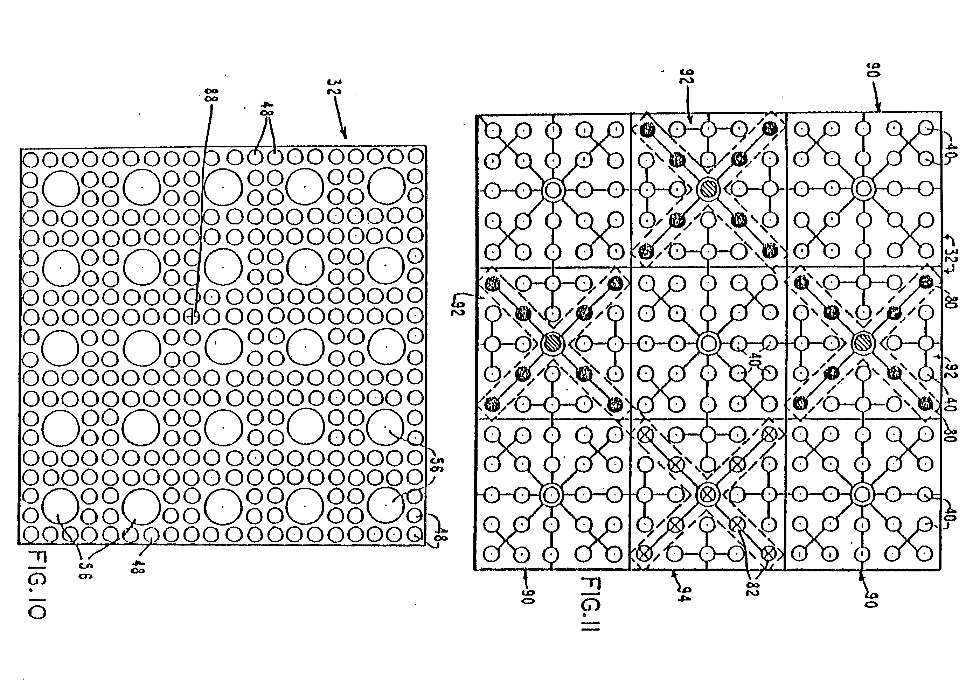

As can be seen in Figure 10, each fuel assembly 32 comprises an array of fuel elements 48 and an array of guide tubes 56. Generally, control rods 38 and gray rods 82 are used only in the diagonally arranged guide tubes 56 while displacer rods 40 are generally used in all guide tubes 56 of a given fuel assembly. In addition, an instrument tube 88 is provided near the center of each fuel assembly 32 for accommodating data instrumentation such as movable fission chambers. While each fuel assembly 32 is essentially identical to the one shown in Figure 10, each fuel assembly 32 can produce a different function depending on whether guide tubes 56 are occupied by reactor coolant, displacer rods 40, control rods 80, or gray rods 82. Displacer rods 40 and gray rods 82 are generally chosen to be approximately the same size so as to displace approximately the same volume of water. However, gray rods 82 can be thick walled stainless steel cylindrical rods which have higher reactivity worths than do displacer rods 40 so that they may be used to offset the effects of xenon transients during load follow operations in addition to moderator displacement.

Referring now to Figure 11, a fuel assembly 32 in which no control rods 80 of gray rods 82 are used and in which only displacer rods 40 are used in guide tubes 56 is referred to generally as displacer assembly 90. A fuel assembly 32 in which both displacer rods 40 and control rods 80 are employed (but no gray rods) is referred to as control assembly 92. Similarly, a fuel assembly 32 in which both displacer rods 40 and gray rods 82 are used is called a gray assembly 94. It should be noted that in Figure 11 fuel elements 48 have been omitted for clarity and that those fuel assemblies are similar to those shown in Figure 10.

Still referring to Figure 11, each of the control rods 80 and gray rods 82 are attached to a spider (not shown) similar to spider 58 except that the spider for control rods 80 of gray rods 82 generally only affects one fuel assembly. In this manner, all control rods 80 or gray rods 82 in a given fuel assembly can be raised or lowered by a single drive mechanism. Furthermore, since each displacer rod spider 58 can extend into the adjacent fuel assemblies (as illustrated in the center portion of Figure 11 and in Figure 4), the displacer rod spider's 58 movement affects the control on five fuel assemblies and reduces the number of displacer rod drive mechanisms needed. Of course, on the periphery of the quarter core (as shown in Figure 7) the particular spiders may move less than the usual number of rods because there are no adjacent fuel assemblies or there are unrodded locations 84.

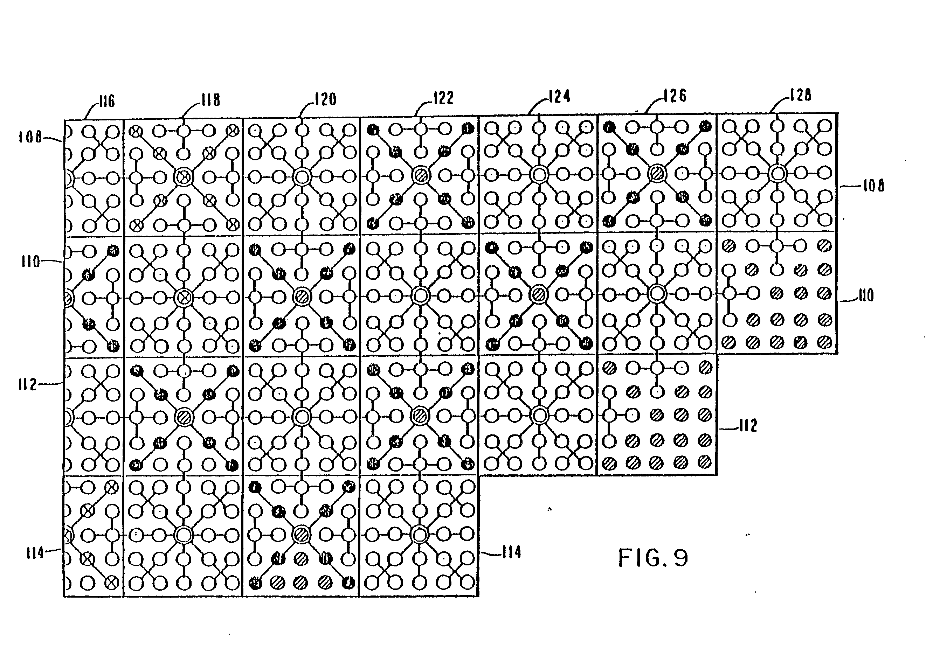

Referring again to Figures 8 and 9, which comprise Figure 7, a quarter core arrangement, each row or partial row is numbered 100—114 and each column or partial column is numbered 116—130 and comprises:

Fuel Assembly
(100, 116) quarter displacer assembly
(110, 118) half control assembly
(100, 120) half displacer assembly
(100, 122) half control assembly
(100, 124) half displacer assembly
(100, 126) half control assembly
(100, 128) half displacer assembly
(100, 130) half gray assembly

(102, 116) half control assembly
(102, 118) full displacer assembly
(102, 120) full gray assembly
(102, 122) full displacer assembly
(102, 124) full gray assembly
(102, 126) full displacer assembly
(102, 128) full control assembly
(102, 130) full displacer assembly

(104, 116) half displacer assembly
(104, 118) full gray assembly
(104, 120) full displacer assembly
(104, 122) full control assembly
(104, 124) full displacer assembly
(104, 126) full control assembly
(104, 128) full displacer assembly
(104, 130) partial control-unrodded assembly

(106, 116) half control assembly
(106, 118) full displacer assembly
(106, 120) full control assembly
(106, 122) full displacer assembly
(106, 124) full control assembly
(106, 126) full displacer assembly

(106, 128) full control assembly
(106, 130) full displacer assembly

(108, 116) half displacer assembly
(108, 118) full gray assembly
(108, 120) full displacer assembly
(108, 122) full control assembly
(108, 124) full displacer assembly
(108, 126) full control assembly
(108, 128) full displacer assembly

(110, 116) half control assembly
(110, 118) full displacer assembly
(110, 120) full control assembly
(110, 122) full displacer assembly
(110, 124) full control assembly
(110, 126) full displacer assembly
(110, 128) partial displacer unrodded assembly

(112, 116) half displacer assembly
(112, 118) full control assembly
(112, 120) full displacer assembly
(112, 122) full control assembly
(112, 124) full displacer assembly
(112, 126) partial displacer unrodded assembly

(114, 116) half gray assembly
(114, 118) full displacer assembly
(114, 120) partial control unrodded assembly
(114, 122) full displacer assembly

As can be seen from the above description of the quarter core, the core configuration based on this concept can be illustrated generally as shown in Figure 11. Basically, the fuel assembly in the center of the full core as represented by fuel assembly (100, 116) in Figure 7 can be chosen to be either a control assembly 92 or preferably a displacer assembly 90. Once this is chosen, the four fuel assemblies immediately adjacent to the flat sides of the center fuel assembly are chosen to be the other type and the fuel assemblies on the diagonal are chosen to be the same type as the center assembly. This pattern is then continued in an alternating fashion. For example, the center fuel assembly (100, 116) in Figure 7 was chosen to be a displacer assembly 90 so that the fuel assemblies on its adjacent flat sides are chosen to be either control assemblies 92 or gray assemblies 94 while those on the diagonal are chosen to be displacer assemblies 90. This pattern is repeated in alternating fashion until the periphery of the core is reached where the end fuel assemblies may be chosen to be hybrid assemblies based on the nuclear physics of the particular core. Whether a particular assembly is chosen to be a control assembly 92 or a gray assembly 94 is determined by first selecting the number and location of control assemblies needed based on conventional core design. The remainder of the assemblies not chosen to be control assemblies 92 are then used as gray assemblies 94. Thus, substantially the entire core can be arranged on an alternating pattern of displacer assemblies and control or gray assemblies with practically all the fuel assemblies being served by at least one displacer rod spider 58 and with each displacer rod spider 58 serving generally 5 fuel assemblies. Moreover, each fuel assembly is served by at least one drive mechanism for either displacer rods, control rods or gray rods.

The illustrated core arrangement provides a means by which the neutron spectrum can be controlled in a "spectral shift" fashion by controlling the moderator volume in the core. This can be accomplished by displacing and replacing the water coolant in the core at appropriate times thereby changing the moderation of the core. Displacer rods 40 and gray rods 82 can be used to affect this moderation change.

In operation, all displacer rods 40 and gray rods 82 are inserted in core 34 at the beginning of the core life. However, none of the control rods 80 need be inserted at that time. The insertion of displacer rods 40 and gray rod 82 is done by activating the appropriate drive mechanism such as displacer rod drive mechanism 38. When the drive mechanism is activated, displacer rods 40 and gray rods 82 fall into the appropriate guide tubes 56 in fuel assemblies 32. The displacer rods and gray rods will displace their volume of coolant (water) thus reducing the volume of moderator in core 34. The reduction of moderator hardens the neutron spectrum of the core and increases plutonium production. This hardening of the neutron spectrum is generally referred to as "spectral shift". The harder neutron spectrum reduces boron chemical shim requirements, results in a more negative moderator temperature coefficient, and reduces or eliminates burnable poison requirements. As the uranium fuel in the core is depleted over the life of the core, a certain number of displacer rods 40 and/or gray rods 82 may be withdrawn from the core by activating their respective drive mechanisms. The withdrawal of the rods allows more water-moderator into the core region and increases moderation of the core. This, in effect, introduces reactivity worth at a time when fuel depletion is causing a reactivity worth depletion. Thus, the reactivity of the core can be maintained at appropriate levels for a longer time. The withdrawal of the rods can continue at a selective rate (depending on core conditions) until, near the end of core life, all displacer rods 40 and all gray rods 82 have been withdrawn from the core. The selection and manipulation of the displacer rods can be chosen in the manner disclosed in EP—A1—0 054 790.

The displacer rods can be used at start-up to displace approximately 20% of the core water volume and can remain inserted until the boron shim concentration nears zero ppm which is approximately 60% into the fuel cycle. The use of displacer rods in this manner can result in approximately 10% reduction in uranium fuel requirements for a given core life which results in a 10% fuel cost savings. In addition, the use of burnable poison rods can be effectively eliminated, a further cost reduction.

In controlling the operation of a nuclear reactor, it is well-known in the art that banks of control rods 80 are sequentially inserted or withdrawn in accordance with the desired energy output of the nuclear reactor. The output of the reactor is increased if control rods 80 are positionally withdrawn from the reactor and decreased if control rods 80 are positionally inserted into the reactor.

Typically, control rods 80 are arranged in a plurality of banks comprising a plurality of control rod clusters. When it is desired to increase the output of the reactor, one bank of rods will be sequenced, that is, a first bank of rods will be incrementally withdrawn from the reactor, others will be withdrawn if more power is required. It is generally desirable to begin to withdraw other banks before the first bank has been withdrawn its maximum distance.

Since each bank is composed of one or more clusters of rods, when a bank is inserted or withdrawn, these clusters are incrementally moved in the desired direction. If the direction of the rods is changed, usually the last cluster of rods which have been moved prior to the change in direction, is the first to be moved in the opposite direction when the change of direction is called for. This is so in order to maintain proper alignment of the rods within the reactor and the desired control over the operation of the reactor.

Since this movement of control rods 80 will result in a change in core reactivity (either increased or decreased) and since movement of displacer rods 40 and gray rods 82 will also either increase or decrease core reactivity, it is desirable to coordinate the movement of displacer rods 40, control rods 80 and gray rods 82 to achieve the desired level and distribution of reactivity and power throughout the core. The appropriate power level and power distribution can be attained by monitoring the reactivity condition of the core together with the reactivity requirements and then selecting the proper type and location of either displacer rod 40, control rod 80, or gray rod 82 to be moved. Because displacer rods 40, control rods 80, and gray rods 82 have different reactivity worths and because each type rod is dispersed in various locations throughout the core, the proper selection and manipulation of the rods results in greater flexibility in attaining the desired core power level and power distribution than was achievable with control rods alone. Thus, the use of displacer rods 40, control rods 80, and gray rods 82, in various combinations, provides great advantages in the control of a nuclear reactor.

As a result, it can be seen that the reactivity of a nuclear reactor can effectively be controlled through moderator volume control by the use of the displacer rods.

## Claims

1. A spectral shift pressurized water nuclear reactor including a reactor vessel (22) having an inlet (26) and an outlet (28) for circulating a water coolant in heat transfer realationship with a core (34) disposed therein, a plurality of fuel assemblies (32) disposed in said core (34) for generating heat by nuclear fission, and a plurality of incrementally movable control rods disposed in said reactor for controlling the power level and power distribution of said reactor, characterised in that a plurality of water displacer elements (40) is so arranged in said reactor vessel (22) as to be movable into and out of said core (34) for displacing water therefrom when said displacer elements are inserted in said core (34) thereby to reduce the core moderation, said water displacer elements (40) containing a material having a substantially lower neutron absorbing capability than said control rods, and that a separate hydraulically operated drive mechanism (38) is mounted on said reactor vessel (22) and connected to said water displacer elements (40) for completely inserting said displacer elements into, or completely withdrawing said displacer elements (40) from, said core (34).

2. A nuclear reactor according to claim 1, characterised in that said hydraulic displacer rod drive mechanism (38) comprises a spider (58) having said displacer elements (40) attached thereto, and a drive shaft (64) attached to said spider (58) and extending through said reactor vessel (22) into said hydraulic drive mechanism (38) mounted on the closure head (24) of said reactor vessel (22) for selectively vertically moving said drive shaft (64) and said spider (58) with respect to said fuel assemblies (32).

3. A method of operating a spectral shift pressurized water nuclear reactor including a reactor vessel (22) having an inlet (26) and an outlet (28) for circulating a water coolant in heat transfer relationship with a core (34) disposed therein, a plurality of fuel assemblies (32) disposed in said core (34) for generating heat by nuclear fission, a plurality of incrementally movable control rods disposed in said reactor for controlling the power level and power distribution of said reactor, characterised in that at least some of said control rods are selectively incrementally moved relative to said core, whereas low neutron absorbing water displacer elements (40) are selectively completely withdrawn from, or inserted into, said core (34) for adjusting the power level and power distribution of said reactor.

4. A method according to claim 3, characterised in said at least one of said control rods is completely withdrawn from, or inserted into, said core (34).

5. A method according to claims 3 or 4, characterised in that said control rods are moved by an electro-mechanical control rod drive mechanism (36) whereas said low neutron absorbing water displacer elements (40) are moved by a hydraulic displacer rod drive mechanism (38).

## Patentansprüche

1. Mit Spektralverschiebung gesteuerter Druckwasserreaktor mit einem Reaktorbehälter (22), der einen Einlaß (26) und einen Auslaß (28) zum Hindurchzirkulieren von mit einem darin angeordneten Reaktoren (34) in Wärmeaustausch stehendem Kühlwasser aufweist, weiter mit einer Vielzahl von im Reaktorkern (34) angeordneten Brennelementen (32) zur Erzeugung von Wärme durch Kernspaltung, und mit einer Vielzahl von in dem Reaktor angeordneten, schrittweise beweglichen Steuerstäben zur Steuerung des Leistungspegels und der Leistungsverteilung des Reaktors, dadurch gekennzeichnet, daß eine Vielzahl von Wasserverdrängerelementen (40) derart im Reaktorbehälter (22) angeordnet ist, daß sie in den und aus dem Reaktorkern (34) bewegbar sind, um, wenn die Verdrängerelemente in den Reaktorkern (34) eingeschoben sind, Wasser aus diesem zu verdrängen und dadurch die Reaktorkernmoderation zu verringern, wobei die Wasserverdrängerelemente (40) ein Material mit beträchtlich niedrigerer Neutronenabsorptionsfähigkeit als die Steuerstäbe enthalten, und daß ein gesonderter, hydraulisch betätigter Antriebsmechanismus (38) auf dem Reaktorbehälter (22) montiert und mit den Wasserverdrängerelementen (40) gekuppelt ist, um die Verdrängerelemente (40) vollständig in den Reaktorkern (34) einzuschieben bzw. vollständig aus diesem herauszuziehen.

2. Kernreaktor nach Anspruch 1, dadurch gekennzeichnet, daß der hydraulisch Verdrängerstabantriebsmechanismus (38) einen Stern (58), an welchem die Verdrängerelemente (40) befestigt sind, und eine an dem Steuern (58) befestigte Antriebsstange (64) aufweist, welche durch den Reaktorbehälter (22) hindurch in den auf dem Verschlußdeckel (24) des Reaktorbehälters (22) montierten hydraulischen Antriebsmechanismus (38) ragt, um die Antriebsstange (64) und den Stern (58) mit Bezug auf die Brennelemente (32) wahlweise vertikal zu verschieben.

3. Verfahren zum Betrieb eines mit Spektralverschiebung gesteuerten Druckwasserreaktors mit einem Reaktorbehälter (22), der einen Einlaß (26) und einen Auslaß (28) zum Hindurchzirkulieren von mit einem darin angeordneten Reaktorkern (34) im Wärmeaustausch stehendem Kühlwasser aufweist, weiter mit einer Vielzahl von in dem Reaktorkern (34) angeordneten Brennelementen zur Erzeugung von Wärme durch Kernspaltung, und mit einer Vielzahl von in dem Reaktor angeordneten, schrittweise beweglichen Steuerstäben zur Steuerung des Leistungspegels und der Leistungsverteilung des Reaktors, dadurch gekennzeichnet, daß mindestens einige der Steuerstäbe wahlweise schrittweise relativ zum Reaktorkern verschoben werden, während nur schwach neutronenabsorbierende Wasserverdrängerelemente (40) wahlweise vollständig aus dem Reaktorkern (34) herausgezogen oder in diesen eingeschoben werden, um den Leistungspegel und die Leistungsverteilung des Reaktors einzustellen.

4. Verfahren nach Anspruch 3, dadurch gekennzeichnet, daß mindestens einer der Steuerstäbe vollständig aus dem Reaktorkern (34) herausgezogen oder in diesen eingeschoben wird.

5. Verfahren nach Anspruch 3 oder 4, dadurch gekennzeichnet, daß die Steuerstäbe mittels eines elektromechanischen Steuerstabantriebsmechanismus (36) verschoben werden, während die nur schwach neutronenabsorbierenden Wasserverdrängerelemente (40) mittels eines hydraulischen Verdrängerstabantriebsmechanismus (38) verschoben werden.

**Revendications**

1. Réacteur nucléaire à eau sous pression et à dérive spectrale, comprenant une cuve (22) de réacteur avec une entrée (26) et une sortie (28) pour la circulation d'une eau de refroidissement en vue d'un échange de chaleur avec un coeur (34) placé dans la cuve, une série d'assemblages combustibles (32) disposés dans ce coeur (34) pour produire de la chaleur par fission nucléaire, et une série de barres de commande mobiles selon une progression régulière et placées dans ce réacteur pour régler le niveau et la répartition de la puissance du réacteur, caractérisé en ce qu'une série d'élément (40) dé déplacement de l'eau sont disposés dans la cuve de réacteur (22), de manière à pouvoir être introduits dans le coeur (34) ou en être retirés afin d'expulser l'eau du coeur lorsque ces éléments de déplacement sont introduits dans ce coeur (34), en réduisant de ce fait la modération du coeur, ces éléments (40) de déplacement de l'eau contenant une substance ayant un pouvoir d'absorption des neutrons plus faible que celui des barres de commande, et en ce qu'un mécanisme hydraulique séparé (38) de translation est monté sur la cuve (22) du réacteur et est relié aux éléments (40) de déplacement de l'eau afin d'introduire complètement ces éléments (40) de déplacement dans le coeur (34) ou les en retirer complètement.

2. Réacteur nucléaire suivant la revendication 1, caractérisé par le fait que ce mécanisme hydraulique (38) de translation des barres de déplacement comprend un croisillon (58) auquel sont fixées les éléments (40) de déplacement, et un arbre (64) de translation sur lequel est fixé le croisillon (58) et qui se prolonge à travers la cuve (22) du réacteur jusqu'au mécanisme hydraulique (38) de translation monté sur la tête (24) de fermeture de la cuve (22) du réacteur pour le déplacement de l'arbre (64) de translation et du croisillon (58) verticalement et sélectivement par rapport aux assemblages combustibles (34).

3. Procédé de fonctionnement d'un réacteur à eau sous pression et à dérive spectrale, comprenant une cuve de réacteur (22) avec une entrée (26) et une sortie (28) pour la circulation d'une eau de refroidissement en vue d'un échange de chaleur avec un coeur (34) placé dans la cuve, une série d'assemblages combustibles (32) disposés dans cer coeur (34) pour produire de la chaleur par fission nucléaire, une série de barres de commande mobiles selon une progression régulière et placées dans le réacteur pour régler le niveau et la répartition de puissance du réacteur, caractérisé par le fait qu'au moins certaines des barres de commande sont sélectivement et progressivement déplacées par rapport au coeur, tandis que les éléments de déplacement de l'eau (40) à faible pouvoir d'absorption des neutrons sont sélectivement et complètement retirés du coeur ou introduits dans celui-ci, afin de régler le niveau et la répartition de la puissance du réacteur.

4. Procédé suivant la revendication 3, caractérisé par le fait qu'au moins l'une des barres de commande est complètement retirée du coeur (34) ou complètement introduite dans ce coeur.

5. Procédé suivant l'une des revendications 3 ou 4, caractérisé par le fait que les barres de commande sont déplacées par un mécanisme électromécanique (36) de translation des barres de commande, tandis que les éléments (40) de déplacement de l'eau à faible pouvoir d'absorption des neutrons sont déplacés par un mécanisme hydraulique (38) de translation des barres de déplacement.

FIG. 1

FIG. 2

FIG. 3

FIG. 4

FIG. 5

FIG. 6

FIG. 7

FIG.8

FIG.9

FIG.11

FIG.10